# EUROPÄISCHE PATENTSCHRIFT

(11) **EP 3 497 347 B1**
(45) Veröffentlichungstag und Bekanntmachung des Hinweises auf die Patenterteilung: **09.12.2020**
(21) Anmeldenummer: 17748725.3
(22) Anmeldetag: 01.08.2017
(51) Int. Cl.: F16D 55/225, F16D 65/092, B22D 17/22

(54) **BREMSTRÄGER**
BRAKE CARRIER
SUPPORT D'ÉTRIER DE FREIN

(30) Priorität: 10.08.2016 DE 102016114826
(43) Veröffentlichungstag der Anmeldung: 19.06.2019
(73) Patentinhaber: KNORR-BREMSE Systeme für Nutzfahrzeuge GmbH, 80809 München (DE)
(72) Erfinder: FISCHL, Tobias, 80336 München (DE)
(86) Internationale Anmeldenummer: PCT/EP2017/069471
(87) Internationale Veröffentlichungsnummer: WO 2018/029048

(56) Entgegenhaltungen:
- DE-A1-102013 016 312
- DE-A1-102013 110 159
- DE-A1-102014 101 083

## Beschreibung

Die vorliegende Erfindung betrifft einen Bremsträger für eine Scheibenbremse nach dem Oberbegriff des Anspruchs 1. Die Erfindung bezieht sich auch auf eine Scheibenbremse, eine Gießform und ein Verfahren zum Herstellen eines Bremsträgers.

Beim Betätigen einer Scheibenbremse mit einem als Schiebesattel ausgebildeten Bremssattel wird die Bremskraft über eine in dem Bremssattel der Scheibenbremse integrierte Zuspannmechanik auf Bremsbeläge und dadurch auf eine Bremsscheibe übertragen. Bei diesem Vorgang wird ein zuspannseitiger Bremsbelag in Richtung der Bremsscheibe bewegt. Sobald sich der zuspannseitige Bremsbelag in Kontakt mit der Bremsscheibe befindet, wird der Bremssattel durch die entstehende Gegenkraft mit einem sattelrückenseitigen Bremsbelag in Richtung Bremsscheibe geschoben.

Sobald auch der sattelrückenseitige Bremsbelag die Bremsscheibe berührt, wird eine Bremswirkung erzeugt. Zusätzlich wird die Zuspannmechanik bei zunehmendem Verschleiß zur Sicherstellung eines konstanten Lüftspiels weiter ausgefahren. Die benötigte Zuspannkraft wird durch einen Bremshebel erzeugt, der bei Scheibenbremsen nach dem Stand der Technik vielfach durch einen Druckluftzylinder betätigt wird.

Der Bremssattel ist verschiebbar an dem ortsfesten Bremsträger gelagert, welcher fest an einem Achsflansch befestigt ist. Der Bremsträger führt die Bremsbeläge jeweils in einem Belagschacht und stützt beim Bremsen entstehende Umfangskräfte ab. Durch einen Scheibenumgriff des Bremsträgers umgibt der Bremsträger einen Teil der Bremsscheibe. Ein Freiraum zwischen der Bremsscheibe und dem Scheibenumgriff des Bremsträgers muss einen relativ geringen Abstand zum Bremsträger aufweisen, um eine sichere Abstützung bzw. Führung der Bremsbeläge zu gewährleisten.

Gattungsgemäße Bremsträger für Scheibenbremsen -wie z.B. in der DE 10 2013 110 159 A1 beschrieben- werden einstückig vorzugsweise durch Urformverfahren hergestellt, vorzugsweise im Sandgießverfahren, wobei als Werkstoff vorzugsweise Gusseisen mit Kugelgraphit bzw. Sphäroguss eingesetzt wird. Fertigungsprozessbedingt weisen gegossene Bremsträger einen Formteilungsgrat auf.

Dieser Formteilungsgrat liegt bei gegossenen Bremsträgern nach dem Stand der Technik im Bereich des Freiraums zwischen der Bremsscheibe und dem Scheibenumgriff bzw. im Bereich eines so genannten Bremsscheibenschachtes.

Da dieser Formteilungsgrat an dieser Stelle stört, muss er im Rahmen eines Putzprozesses oder im Rahmen einer zerspanenden Fertigbearbeitung des Bremsträgers entfernt werden. Da die Zugänglichkeit des Formteilungsgrates an der Innenseite des Scheibenumgriffs erschwert ist, ist seine Entfernung entsprechend aufwändig und damit kostenintensiv.

Insofern haben sich derartige einstückige Bremsträger grundsätzlich bewährt, bieten aber noch weiteres Optimierungspotential. Aus der DE 10 2014 101 083 A1 ist ein Bremsträger bekannt, bei dem der Formteilungsgrat zumindest bereichsweise in seitlichen Vertiefungen im Bereich des Scheibenumgriffs ausgebildet ist. Nachteilig bei dieser Lösung ist eine gewisse Schwächung des Querschnitts des Scheibenumgriffs durch die Vertiefungen, insbesondere im Bereich des so genannten Nabenschwunges des Scheibenumgriffs.

Der Erfindung liegt daher die Aufgabe zu Grunde, einen hinsichtlich des Formteilungsgrates weiter optimierten Bremsträger zu schaffen.

Die Erfindung löst diese Aufgabe durch den Gegenstand des Anspruchs 1. Ferner schafft die Erfindung die Gegenstände des Anspruchs 11 und des Anspruchs 12 sowie ein Verfahren nach Anspruch 13.

Demnach besteht ein wesentlicher Unterschied zum Stand der Technik darin, dass die Formteilungsfläche und der Formteilungsgrat außerhalb des Scheibenumgriffs angeordnet sind.

Dadurch ist der Formteilungsgrat vorteilhaft an eine nicht kritische Stelle des Bremsträgers verlegt und deshalb vorteilhaft einfach und damit kostengünstig entfernbar.

In einer bevorzugten Ausführungsform der Erfindung sind die Formteilungsfläche und der Formteilungsgrat oberhalb der Trägerhörner angeordnet.

Dadurch ist der Formteilungsgrat an einer nicht kritischen Stelle - nämlich jeweils am freien Ende der Trägerhörner - des Bremsträgers angeordnet und deshalb vorteilhaft einfach und damit kostengünstig entfernbar, sofern dies erforderlich ist.

Vorteilhaft ist zudem, dass die Trägerhörner eine unterschiedliche Höhe aufweisen, insbesondere, dass die beiden Trägerhörner auf einer befestigungsflanschzugewandten Seite des Bremsträgers jeweils eine größere Höhe aufweisen als die beiden Trägerhörner auf der befestigungsflanschabgewandten Seite des Bremsträgers.

Dadurch ist in vorteilhafter Weise eine kompakte, bauraumsparende Geometrie für die Trägerhörner auf der befestigungsflanschabgewandten Seite des Bremsträgers gewählt.

Weitere vorteilhafte Varianten der Erfindung sind den Unteransprüchen zu entnehmen. Ausführungsbeispiele eines erfindungsgemäßen Bremsträgers sind in den Zeichnungen dargestellt und werden im Folgenden näher beschrieben. Es zeigen:
- Figur 1:: eine räumlich-isometrische Darstellung eines Bremsträgers nach dem Stand der Technik;
- Figur 1a: eine schematische Perspektivdarstellung einer erfindungsgemäßen Scheibenbremse;
- Figur 2:: eine Seitenansicht des Bremsträgers aus Figur 1 im Schnitt;
- Figur 3:: ein Ausschnitt einer Seitenansicht im Schnitt einer Gießform eines Bremsträgers nach dem Stand der Technik;
- Figur 4:: ein Ausschnitt einer Seitenansicht im Schnitt einer Gießform eines erfindungsgemäßen Bremsträgers;
- Figur 5:: ein schematisches Flussdiagramm eines Ausführungsbeispiels eines erfindungsgemäßen Verfahrens; und

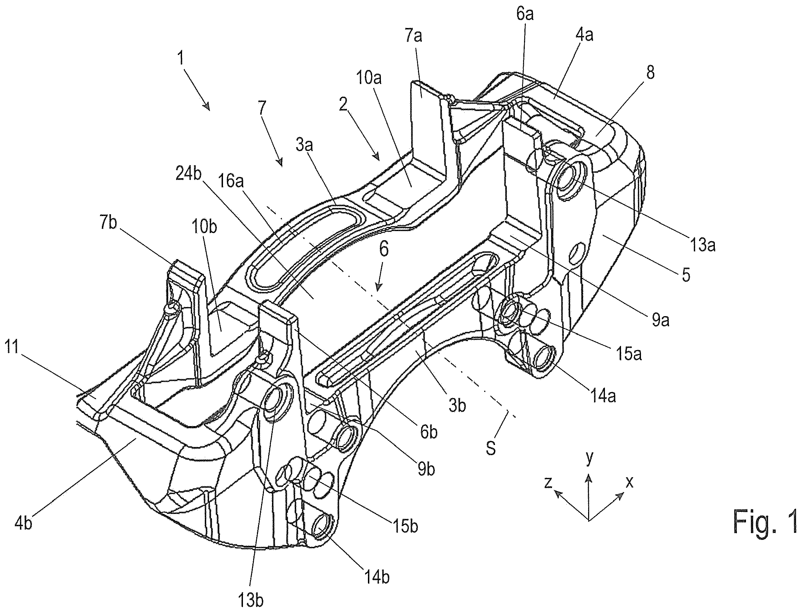

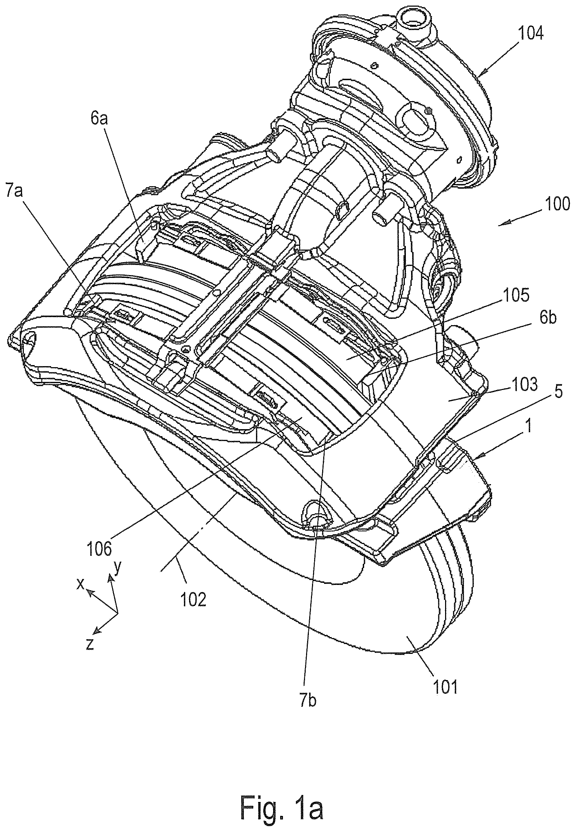

Fig. 1 stellt eine räumlich-isometrische Darstellung eines Bremsträgers 1 nach dem Stand der Technik dar. **Fig. 1a** zeigt eine schematische Perspektivdarstellung einer erfindungsgemäßen Scheibenbremse 100.

Koordinaten x, y, z dienen zur Orientierung, wobei die x-Richtung in einer Längsrichtung eines nicht gezeigten Fahrzeugs verläuft, dem die Scheibenbremse 100 zugeordnet ist. Die y-Richtung gibt einen Höhenrichtung an, wobei die z-Richtung eine Breitenrichtung des gedachten Fahrzeugs angibt.

Die Scheibenbremse 100 umfasst hier den Bremsträger 1, eine Bremsscheibe 101 mit einer Bremsscheibendrehachse 102, einen als Schiebesattel ausgeführten Bremssattel 103, einen Bremszylinder 104 zur Betätigung der Scheibenbremse 100, einen zuspannseitigen Bremsbelag 105 und einen sattelrückenseitigen Bremsbelag 106.

In **Fig. 1** ist ein Bremsträger 1 einer Scheibenbremse 100 dargestellt, welcher einem Bremsträger 1 nach dem Stand der Technik entspricht. Der Bremsträger 1 ist vorzugsweise einstückig ausgebildet. Er ist vorzugsweise durch ein Urformverfahren hergestellt, besonders bevorzugt durch Gießen, wobei bevorzugt eine duktile Gusseisensorte, besonders bevorzugt Gusseisen mit Kugelgraphit, verwendet ist.

Der Bremsträger 1 überspannt bzw. umgreift rahmenartig als ein Scheibenumgriff 2 bzw. als Scheibenrahmen einen Abschnitt der drehfest mit einer Fahrzeugachse verbundenen Bremsscheibe 101 der Scheibenbremse 100. Die Bremsscheibe 101 ist um ihre Bremsscheibendrehachse 102, die in z-Richtung verläuft, drehbar. Parallel bzw. in axialer Richtung zur Bremsscheibe 101 beabstandet, weist der Bremsträger 1 beidseits zu dieser jeweils eine Brückenstrebe 3a, 3b auf. Die Brückenstreben 3a, 3b weisen eine im Wesentlichen geradlinige Form auf, die im Bereich des Achsübergriffs bzw. Nabenübergriffs diesen bogenförmig überspannt. So werden die Brückenstreben 3a, 3b umgangssprachlich auch jeweils als bogenartiger Nabenschwung 3a, 3b bezeichnet. Die beiden Brückenstreben 3a, 3b sind parallel zur Bremsscheibendrehachse 102 bzw. in radialer Richtung zur Bremsscheibe beabstandet über Rahmenabschnitte 4a, 4b miteinander zum Scheibenumgriff 2 verbunden. Der Scheibenumgriff 2 umgreift auf diese Weise einen Bremsscheibenschacht 24.

Die eine der Brückenstreben 3b liegt auf der Seite, an der der Bremsträger 1 einen Befestigungsflasch 5 aufweist, der an einem Achsflansch (hier nicht dargestellt) befestigt werden kann. Der Achsflansch ist jeweils an einem Ende einer Fahrzeugachse angeordnet. Der Befestigungsflansch 5 des Bremsträgers 1 wird demnach an der Fahrzeugachse stabilisiert. Der Bremsträger 1 weist ferner auf jeder Seite der Bremsscheibe 101 zwei Trägerhörner 6a, 6b bzw. 7a, 7b auf. Insgesamt gibt es daher vier der Trägerhörner 6a, 6b bzw. 7a, 7b. Sie sind mit dem Scheibenumgriff 2 einstückig ausgebildet. Sie erstrecken sich von den Rahmenabschnitten 4a, 4b ausgehend von einer (definitionsgemäß nachfolgend als Grundfläche 8 bezeichneten) Fläche bzw. Ebene 8 nach oben.

Die Trägerhörner 6a, 6b sowie 7a, 7b erstrecken sich insofern in Bezug auf das Koordinatensystem in Fig. 1 in Richtung positiver y-Werte. Sie sind hier vorzugsweise symmetrisch zu jeweils einem der Nabenschwünge 3a, 3b angeordnet. Sie liegen ferner vorzugsweise in einer Ebene parallel zur Reibfläche der Bremsscheibe in Umfangrichtung hintereinander bzw. in einer Ebene parallel zur x-y-Ebene in Bezug auf das Koordinatensystem in Fig. 1. Sie bilden jeweils einen Brembelagschacht 6, 7 zur jeweiligen Abstützung und Führung der Bremsbeläge 105, 106.

Die beiden Trägerhörner 6a, 6b auf der befestigungsflanschzugewandten Seite des Bremsträgers 1 weisen jeweils einen L-förmigen Querschnitt auf. Zudem weisen vorzugsweie auch die beiden Trägerhörner 7a, 7b auf der befestigungsflanschabgewandten Seite des Bremträgers 1 jeweils einen L-förmigen Querschnitt auf. Das "L"ist jeweils in Richtung der Bremsbeläge 105, 106 ausgerichtet, um Stützstellen in Radialrichtung und in Umfangsrichtung für diese Bremsbeläge 105, 106 auszubilen.

Die Trägerhörner 6a, 6b bzw. 7a, 7b bilden mit unteren Stützstellen 9a, 9b bzw. 10a, 10b und den Brückenstreben 3a, 3b des Bremsträgers 1 jeweils einen der zwei Bremsbelagschächte 6, 7 am Scheibenumgriff 2 aus, die jeweils eine Belagträgerplatte des zugehörigen Bremsbelags 105, 106 in Umfangsrichtung, d.h. einlaufseitig und auslaufseitig sowie nach unten hin führen bzw. abstützen.

Einer oder vorzugsweise beide der Rahmenabschnitte 4a, 4b verbreitern sich jeweils ausgehend von einem jeweiligen Ende einer Verstärkungsrippe 11 jeweils bis zu einem Außenrand 12 der befestigungsflanschzugewandten Seite des Bremsträgers 1, bzw. jeweils ausgehend von einem jeweiligen Ende der Verstärkungsrippe 11 parallel zur Fahrzeug-Radachse/ Bremsscheibedrehachse 102 in positiver z-Richtung in Bezug auf das Koordinatensystem der Fig. 1.

Die Stützstellen 9a, 9b bzw. 10a, 10b stützen in y-Richtung bezogen auf das Koordinatensystem in Fig. 1 jeweils den Bremsbelag 105, 106 auf dem Bremsträger 1 ab, wobei die Stützstellen 9a, 9b bzw. 10a, 10b gleichzeitig den Abstand des jeweiligen Bremsbelags 105, 106 zur Fahrzeugachse definieren.

An Befestigungsstellen 13a, 13b sind Lagerbolzen für den als Schiebesattel ausgeführten Bremssattel 103 befestigbar. Dies ist dem Fachmann an sich bekannt und wird deshalb hier nicht näher beschrieben.

Der Bremsträger 1 ist ein in Bezug auf eine Symmetrieebene "S" (siehe Fig. 1), die zwischen der y-Achse und der z-Achse des Koordinatensystems in Fig. 1 bzw. parallel dazu aufgespannt ist, vorzugsweise symmetrisches Bauteil. Er weist zur Aussteifung eine Verstärkungsrippe 11 auf seiner befestigungsflanschabgewandten Außenseite auf. Die Verstärkungsrippe 11 erstreckt sich parallel zu einer Reibfläche der Bremscheibe 101.

Die Verstärkungsrippe 11 weist einen über die gesamte Fläche der befestigungsflanschabgewandten Außenseite des Bremsträgers 1 durchgehenden Konturzug auf. Der Konturzug der Verstärkungsrippe 11 beginnt jeweils an zwei Enden am Rahmenabschnitt 4a, 4b des Bremsträgers 1 und verläuft davon ausgehend jeweils zunächst parallel unter einer Ebene oder in der Ebene der konsolenartigen Grundfläche 8 des Scheibenumgriffs 2 in Bezug auf das Koordinatensystem in Fig. 1 in Richtung betragsmäßig kleinerer bzw. größerer x-Werte nach innen bzw. zur Mitte hin. Der Konturverlauf der Verstärkungsrippe 11 folgt dann zur Mitte hin jeweils dem bogenförmigen Nabenschwung der Brückenstrebe 3b an dessen Außenseite (d.h. an dessen von der Bremsscheibe 101 abgewandten Außenseite) bis zur Symmetrieebene "S". Die Verstärkungsrippe 11 ist zur Symmetrieebene "S" spiegelsymmetrisch ausgebildet. Die Verstärkungsrippe 11 steift die befestigungsflanschabgewandte Seite des Bremsträgers 1 aus.

Der Befestigungsflansch 5 weist Befestigungsstellen 14a, 14b sowie 15a, 15b auf. Die Verstärkungsrippe 11 ist derart positioniert, dass sie oberhalb der Befestigungsstellen 14a, 14b bzw. 15a, 15b des Bremsträgers 1 angeordnet ist. Dadurch ist sie im Bereich der Trägerhörner 7a, 7b nur knapp unterhalb der Ebene oder in der Ebene der Grundfläche 8 des Scheibenumgriffs 2 angeordnet. Durch diese Anordnung wird eine kurze Kraft- und Momenteneinleitung in die Verstärkungsrippe 11 erreicht, so dass durch die Verstärkungsrippe 11 eine Aussteifung der befestigungsflanschabgewandten Seite des Bremsträgers 1 erreicht ist.

Durch eine entsprechend bemessene Dicke der Verstärkungsrippe 11 unter Ausnutzung des maximal verfügbaren Bauraums wird viel Werkstoff des Bremsträgers 1 in einer Ebene parallel zur x-z-Ebene in Bezug auf das Koordinatensystem in Fig. 1 in eine Position möglichst weit vom Scheibenumgriff 2 nach außen gebracht. Dadurch ist das für eine Verformung unter Betriebsbelastung besonders relevante Flächenträgheitsmoment bzw. Flächenmoment zweiten Grades in Bezug auf eine Verformungsachse, die parallel zur y-Achse des Koordinatensystems in Fig. 1 liegt, entsprechend groß ausgelegt. Dies ermöglicht eine Reduzierung von Wandstärken im Bereich des Scheibenumgriffs 2.

In diesem Zusammenhang weisen die beiden Brückenstreben 3a, 3b jeweils Taschen 16a, 16b auf, durch die an diesen Stellen die Dicke bzw. die Wandstärke der jeweiligen Brückenstrebe 3a, 3b des Bremsträgers 1 reduziert ist. Durch die Wandstärkenreduzierung im Bereich der Taschen 16a, 16b wird Werkstoff und damit Gewicht gespart.

Mit dem Begriff "Tasche" ist eine durch eine oder mehrere Wände und einem Boden begrenzte - im Gegensatz zu einer Nut - flächige Ausnehmung innerhalb eines Geometrieelements eines Bauteils gemeint. Durch die Tasche 16a, 16b wird die Dicke des jeweiligen Geometrieelements im Bereich der Tasche 16a, 16b reduziert.

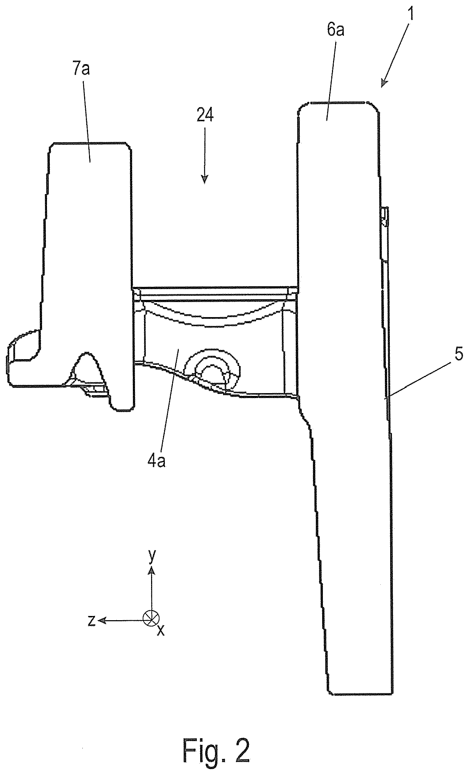

Fig. 2 zeigt eine Seitenansicht des Bremsträgers 1 aus Figur 1 im Schnitt in einer z-y-Ebene.

In **Fig. 2** ist gut erkennbar dargestellt, dass die Trägerhörner 6a, 6b hier eine unterschiedliche Höhe bzw. eine unterschiedliche Erstreckung in positiver y-Richtung in Bezug auf das Koordinatensystem in Fig. 1 im Vergleich zu den Trägerhörner 7a, 7b aufweisen. Die beiden Trägerhörner 6a, 6b auf der befestigungsflanschzugewandten Seite des Bremsträgers 1 weisen dabei hier jeweils eine größere Höhe auf als die beiden Trägerhörner 7a, 7b auf der befestigungsflanschabgewandten Seite des Bremsträgers 1. Dadurch ist in vorteilhafter Weise eine kompakte, bauraumsparende Geometrie für die Trägerhörner 7a, 7b auf der befestigungsflanschabgewandten Seite des Bremsträgers 1 gewählt.

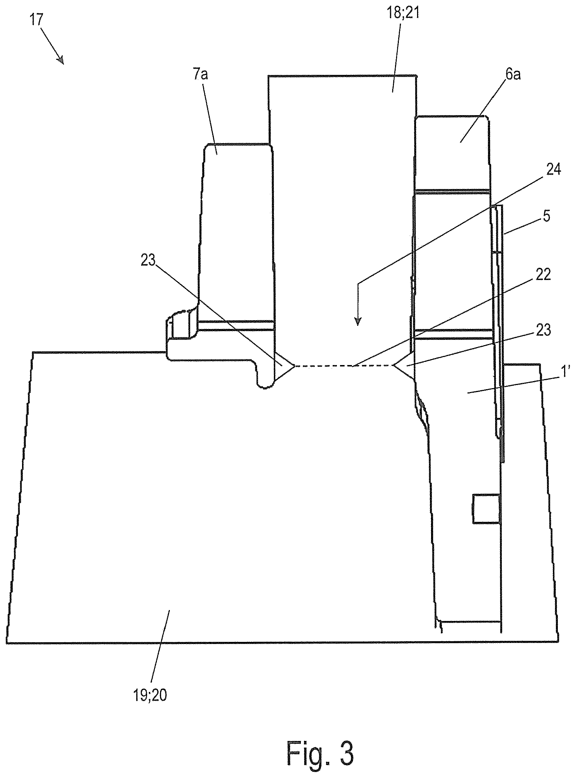

In **Fig. 3** ist ein Ausschnitt einer Seitenansicht im Schnitt einer Gießform 17 des Bremsträgers 1 nach dem Stand der Technik dargestellt. Der Bremsträger 1 wird in einem Gießverfahren mit einem Dauermodell 1' und der verlorenen Gießform 17 - hier und bevorzugt als Sandform ausgeführt - bevorzugt maschinell eingeformt.

Das Gießmodell 1' des Bremsträgers 1 weist die Maße des Bremsträgers 1 zuzüglich eines in der Fachsprache als "Schwindmaß" bezeichneten Faktors auf. Der Faktor berücksichtigt die Volumenreduzierung des gegossenen Bremsträgers 1 beim Erkalten, insbesondere beim Übergang von einem flüssigen in einen festen Zustand. Darüber hinaus weist das Gießmodell 1' Entformschrägen auf, durch die das Gießmodell 1' nach dem Abformen aus der Gießform entfernbar ist, ohne die Gießform zu beschädigen. Der Winkel der Entformschrägen ist abhängig von einer Länge eines zu entformenden Geoemtrielementes. Je größer die Länge des zu entformenden Geometrielementes ist, desto kleiner kann der Winkel der Entformschräge gewählt werden.

Die Gießform 17 umfasst hier eine obere Formhälfte 18 und eine untere Formhälfte 19 und ist somit hier - beispielhaft - als Kastenform ausgeführt. Alternativ kann die Gießform 17 auch als kastenlose Form mit vertikaler Formtrennung ausgeführt sein. In dem Fall wird das Gießmodell 1' in Bezug auf Fig. 2 bzw. Fig. 3 um 90° gedreht eingeformt, so dass sich eine vertikale Formtrennung ergibt.

Der Bremsträger 1 wird vorteilhaft kernlos eingeformt. Der durch den Scheibenumgriff 2 begrenzte Bremsscheibenschacht 24 wird durch einen so genannten stehenden Formballen 20 und einen so genannten hängenden Formballen 21 ausgeformt. Bei dem stehenden Formballen 20 handelt es sich um einen Teil der unteren Formhälfte 19, während der hängende Formballen 21 ein Teil der oberen Formhälfte 18 ist. Im Falle einer vertikalen Formteilung ergeben sich dementsprechend zwar rechte und linke Formballen, jedoch können diese auch als hängende bzw. stehende Formballen verstanden werden, die jeweils um 90° gedeht sind. Beide Formballen 20, 21 stoßen in einer Formteilungsfläche 22 aneinander und formen so den Bremsscheibenschacht 24 aus.

An den jeweiligen Rändern der Formteilungsfläche 22 bildet sich am gegossenen Bremsträger 1 verfahrensbedingt ein Formteilungsgrat 23 aus. Der Formteilungsgrat 23, den der stehende Formballen 20 und der hängenden Formballen 21 verfahrensbedingt am Bremträger 1 erzeugen, ragt bei dem Bremsträger 1 nach dem Stand der Technik in Fig. 1, Fig. 2 sowie Fig. 3 in den Bremsscheibenschacht 24 hinein.

Da die Erstreckung des Bremsscheibenschachtes 24 in radialer Richtung der Bremsscheibe 101 auf Grund des zur Verfügung stehenden Bauraumes des Bremsträgers 1 in radialer Richtung der Bremsscheibe 101 begrenzt und auch deshalb mit entsprechend kleinen Toleranzen versehen ist, muss der Formteilungsgrat 23 im Bereich des Bremsscheibenschachtes 24 bzw. im Bereich des Scheibenumgriffs 2 durch eine mechanisches Trennverfahren entfernt werden. Dies führt zu einem zusätzlichen Aufwand und damit zu zusätzliche Kosten. Erschwert wird die Entfernung des Formteilungsgrates 23 zusätzlich durch die schlechte und daurch erschwerte Zugänglichkeit auf der Innenseite des Scheibenumgriffs 2 im Bereich des Bremsscheibenschachts 24.

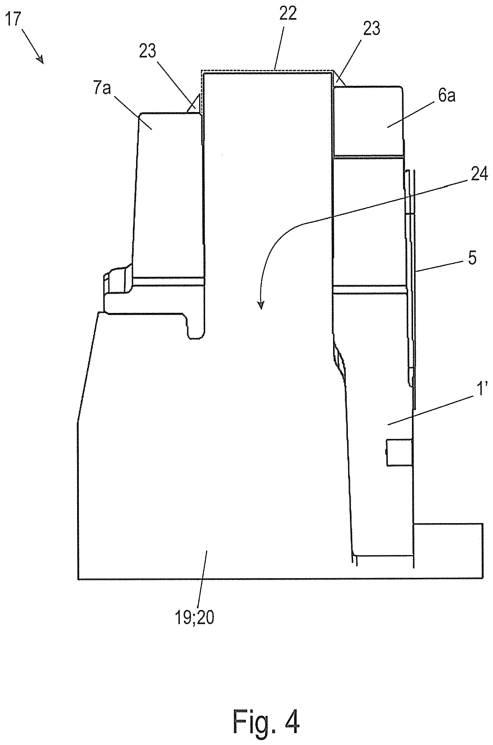

In **Fig. 4** ist ein Ausschnitt einer Seitenansicht im Schnitt einer Gießform 17 des erfindungsgemäßen Bremsträgers 1 dargestellt.

Um Wiederholungen zu vermeiden, werden im Folgenden nur Abweichungen oder Ergänzungen zu der Gießform 17 nach Fig. 3 beschrieben.

Abweichend zu der Darstellung in Fig. 3 weist die Gießform 17 nach Fig. 4 eine Formteilungsfläche 23 auf, die außerhalb des Scheibenumgriffs 2 bzw. außerhalb des Bremsscheibenschachts 24 des Bremsträgers 1 angeordnet ist. Im Ausführungsbeispiel nach Fig. 3 ist die Formtteilungsfläche 22 jeweils oberhalb - d.h. in positiver y-Richtung in Bezug auf das Koordinatensystem in Fig. 3 - der Trägerhörner 6a, 6b sowie 7a, 7b des eingeformten Gießmodells 1' angeordnet.

Dadurch ist der Formteilungsgrat 23 vorteilhaft an einer nicht kritischen Stelle des Bremsträgers 1, nämlich an den jeweiligen freien Enden der Trägerhörner 6a, 6b sowie 7a, 7b angeordnet. Der Formteilungsgrat 23 ist deshalb vorteilhaft einfach und damit kostengünstig entfernbar, sofern dies erforderlich ist. Der dafür erforderliche stehende Formballen 20 ist nach dem Ausführungsbeispiel der Fig. 3 verhältnismäßig lang und ragt über die Trägerhörner 6a, 6b sowie 7a, 7b des eingeformten Gießmodells 1' hinaus. Durch die Länge des stehenden Formballens 20 ist der erforderliche Winkel der Entformschräge vorteilhaft kleiner ausgeführt als bei einem Bremsträger 1 nach dem Stand der Technik in Fig. 2. Dadurch wird in vorteilhafter Weise Werkstoff eingespart.

Die prozessischere Herstellbarkeit des relativ langen stehenden Formballens 20 nach Fig. 4 ist durch die Herstellung der Formhälften 18, 19 nach Fig. 3 durch übliche Gießformpressen und einem ggf. erhöhten Bindemittelgehalt des Formsandes gegeben. Ggf. kann durch ein Maskenformverfahren oder die Verwendung eines speziellen Maskenformsandes die Stabilität des stehenden Ballens nach Fig. 4 weiter verbessert werden, sofern dies erforderlich ist.

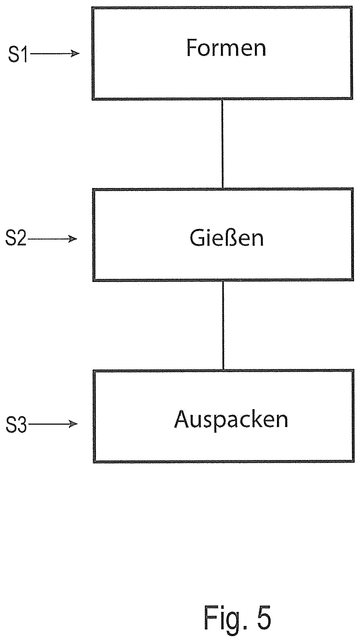

Zur Herstellung des Bremsträgers 1 wird folgendes Verfahren angegeben, welches als ein schematisches Flussdiagramm eines Ausführungsbeispiels des erfindungsgemäßen Verfahrens in **Fig. 5** gezeigt ist.

In einem ersten Verfahrensschritt S1 "Formen" wird zunächst ein Gießmodell 1' des Bremsträgers 1 bereitgestellt.

In einem darauf folgenden Verfahrensteilschritt wird eine obere Formhälfte 18 in einem Formstoff unter Verwendung des Gießmodells 1' abgeformt, wobei die obere Formhälfte 18 einen hängenden Formballen 21 zum Ausformen eines Bremsscheibenschachts 24 des Bremsträgers 1 aufweist.

In einem weiteren Verfahremsteilschritt wird das abgeformte Gießmodell 1' aus der oberen Formhälfte 18 entfernt.

In einem darauf folgenden Verfahrensteilschritt wird eine untere Formhälfte 19 in einem Formstoff unter Verwendung des Gießmodells 1' abgeformt, wobei die untere Formhälfte 19 einen stehenden Ballen 20 zum Ausformen des Bremsscheibenschachts 24 des Bremsträgers 1 aufweist.

In einem weiteren Verfahremsteilschritt wird das abgeformte Gießmodell 1' aus der unteren Formhälfte 19 entfernt.

In einem darauf folgenden Verfahrensteilschritt wird die untere Formhälfte 19 und die oberen Formhälfte 18 zu der Gießform 17 zusammengesetzt, wobei der stehende Formballen 20 und der hängende Formballen 21 an einer Formteilungsfläche 22 aneinanderstoßen, die oberhalb der Trägerhörner 6a, 6b, 7a, 7b des eingeformten Gießmodells 1' angeordnet ist.

In einem zweiten Verfahrensschritt S2 "Gießen" wird flüssiger Werkstoff in die Gießform 17 gegossen.

In einem darauf folgenden dritten Verfahrensschritt S3 "Auspacken" wird der erkaltete Bremträger 1 durch Zerstörung der Gießform 17 aus der Gießform 17 ausgepackt.

In einem weiteren Verfahrensteilschritt erfolgt das Putzen des fertig gegossenen Bremsträgers1 , wobei fakultativ auch der Formtrennungsgrat 23 am Bremsträger 1 entfernt wird.

In einem weiteren Verfahrensteilschritt wird der Bremsträger 1 mechanisch fertig bearbeitet.

### BEZUGSZEICHENLISTE

- 1: Bremsträger
- 1': Gießmodell
- 2: Scheibenumgriff
- 3a, 3b: Brückenstrebe
- 4a, 4b: Rahmenabschnitt
- 5: Befestigungsflansch
- 6,7: Bremsbelagschacht
- 6a, 6b: Trägerhorn
- 7a, 7b: Trägerhorn
- 8: Grundfläche
- 9a, 9b: Stützfläche
- 10a, 10b: Stützfläche
- 11: Verstärkungsrippe
- 12: Außenrand
- 13a, 13b: Befestigungsstelle
- 14a, 14b: Befestigungsstelle
- 15a, 15b: Befestigungsstelle
- 16a, 16b: Tasche
- 17: Gießform
- 18: obere Formhälfte
- 19: untere Formhälfte
- 20: stehender Formballen
- 21: hängender Formballen
- 22: Formteilungsfläche
- 23: Formteilungsgrat
- 24: Bremsscheibenschacht

- 100: Scheibenbremse
- 101: Bremsscheibe
- 102: Bremsscheibendrehachse
- 103: Bremssattel
- 104: Bremszylinder
- 105, 106: Bremsbelag

- S: Symmetrieebene

## Patentansprüche

1. Bremsträger (1) für eine Scheibenbremse (100) mit wenigstens einem Bremsbelag (105, 106), wobei der Bremsträger (1) folgendes aufweist:
a) einen Scheibenumgriff (2), der einen Abschnitt einer Bremsscheibe (101) der zuzuordnenden Scheibenbremse (101) rahmenartig umgreift;
b) wenigstens einen Bremsbelagschacht (6, 7), in dem der Bremsträger (1) den wenigstens einen Bremsbelag (105, 106) führt,
c) wobei der wenigstens eine Brembelagschacht (6, 7) durch Trägerhörner (6a, 6b, 7a, 7b), Stützflächen (9a, 9b, 10a, 10b) und Brückenstreben (3a, 3b) am Scheibenumgriff (2) gebildet ist und
d) der Bremsträger (1) einstückig durch ein Urformverfahren hergestellt ist und einen Formteilungsgrat (23) aufweist,
**dadurch gekennzeichnet, dass**
e) der Formteilungsgrat (23) außerhalb des Scheibenumgriffs (2) jeweils an einem freien Ende der Trägerhörner (6a, 6b, 7a, 7b) angeordnet ist.

2. Bremträger (1) nach Anspruch 1, **dadurch gekennzeichnet, dass** der Bremsträger (1) einen Befestigungsflansch (5) aufweist.

3. Bremsträger (1) nach einem der vorgenannten Ansprüche, **dadurch gekennzeichnet, dass** der Bremsträger (1) eine Verstärkungsrippe (11) aufweist, die auf der befestigungsflanschabgewandten Außenseite des Bremsträgers (1) angeordnet ist.

4. Bremsträger (1) nach Anspruch 3, **dadurch gekennzeichnet, dass** die Versteifungsrippe (11) einen durchgehenden Konturzug aufweist.

5. Bremsträger (1) nach einem der vorgenannten Ansprüche, **dadurch gekennzeichnet, dass** der Scheibenumgriff (2) Rahmenabschnitte (4a, 4b) aufweist.

6. Bremsträger (1) nach Anspruch 5, **dadurch gekennzeichnet, dass** einer oder beide der Rahmenabschnitte (4a, 4b) sich jeweils ausgehend von einem jeweiligen Ende der Verstärkungsrippe (11) jeweils bis zu einem Außenrand (12) der befestigungsflanschzugewandten Seite des Bremsträgers (1), verbreitern.

7. Bremsträger (1) nach einem der vorgenannten Ansprüche, **dadurch gekennzeichnet, dass** die einen Trägerhörner (6a, 6b) eine zu den anderen Trägerhörnern (7a, 7b) unterschiedliche Höhe aufweisen.

8. Bremsträger (1) nach einem der vorgenannten Ansprüche, **dadurch gekennzeichnet, dass** die beiden Trägerhörner (6a, 6b) auf der befestigungsflanschzugewandten Seite des Bremsträgers (1) jeweils eine größere Höhe aufweisen als die beiden Trägerhörner (7a, 7b) auf der befestigungsflanschabgewandten Seite des Bremsträgers (1).

9. Bremsträger (1) nach einem der vorgenannten Ansprüche, **dadurch gekennzeichnet, dass** der Bremsträger (1) durch ein Gießverfahren hergestellt ist.

10. Bremsträger (1) nach Anspruch 9, **dadurch gekennzeichnet, dass** der Bremsträger (1) in einem Gießverfahren mit einem Dauer-Gießmodell (1') und einer verlorenen Gießform (17) hergestellt ist.

11. Scheibenbremse (100) mit einem Bremsträger (1) nach einem der Ansprüche 1 bis 10.

12. Gießform (17) mit zwei Formhälften (18, 19) zur Herstellung eines Bremträgers (1) nach einem der Ansprüche 1 bis 10, wobei die eine Formhälfte (19) einen stehenden Formballen (20) aufweist und die andere Formhälfte (18) einen hängenden Formballen (21) aufweist, die einen Bremsscheibenschacht (24) des Bremsträgers (1) ausformen und der stehende Formballen (20) und der hängende Formballen (21) an einer Formteilungsfläche (22) aneinanderstoßen, **dadurch gekennzeichnet, dass** die Formteilungsfläche (22) jeweils oberhalb der Trägerhörner (6a, 6b, 7a, 7b) eines eingeformten Gießmodells (1') des Bremsträgers (1) angeordnet ist.

13. Verfahren zum Herstellen eines Bremsträgers (1) mit einer Gießform (17) nach Anspruch 12, **gekennzeichnet durch** folgende Verfahrensschritte:
a) Bereitstellen eines Gießmodells (1') des Bremsträgers (1);
b) Abformen einer oberen Formhälfte (18) in einem Formstoff unter Verwendung des Gießmodells (1'), wobei die obere Formhälfte (18) einen hängenden Formballen (21) zum Ausformen eines Bremsscheibenschachts (24) des Bremsträgers (1) aufweist;
c) Entfernen des abgeformten Gießmodells (1') aus der oberen Formhälfte (18);
d) Abformen einer unteren Formhälfte (19) in einem Formstoff unter Verwendung des Gießmodells (1'), wobei die untere Formhälfte (19) einen stehenden Ballen (20) zum Ausformen des Bremsscheibenschachts (24) des Bremsträgers (1) aufweist;
e) Entfernen des abgeformten Gießmodells (1') aus der unteren Formhälfte (18);
f) Zusammensetzen der unteren Formhälfte (19) und der oberen Formhälfte (18) zu der Gießform (17), wobei der stehende Formballen (20) und der hängende Formballen (21) an einer Formteilungsfläche (22) aneinanderstoßen, die oberhalb der Trägerhörner (6a, 6b, 7a, 7b) des eingeformten Gießmodells (1') angeordnet ist;
g) Gießen von flüssigem Werkstoff in die Gießform (17);
h) Auspacken des erkalteten Bremträgers (1) aus der Gießform (17) durch Zerstörung der Gießform;
j) Putzen des Bremsträgers (1);
k) Mechanisches Bearbeiten des Bremträgers (1).

14. Verfahren nach Anspruch 13, **dadurch gekennzeichent,** dass der Verfahrensschritt j) fakultativ das Entfernen eines Formtrennungsgrates (23) beinhaltet.

## Claims

1. A brake carrier (1) for a disc brake (100) having at least one brake pad (105, 106), the brake carrier (1) comprising the following:
a) a wrap-around disc holder (2) that encompasses a portion of a brake disc (101) of the corresponding disc brake (101) in the manner of a frame;
b) at least one brake pad slot (6, 7) in which the brake carrier (1) guides the at least one brake pad (105, 106);
c) the at least one brake pad slot (6, 7) being formed by carrier horns (6a, 6b, 7a, 7b), supporting surfaces (9a, 9b, 10a, 10b) and bridge struts (3a, 3b) on the wrap-around disc holder (2) and
d) the brake carrier (1) being produced in one piece by a primary forming method and having a mould parting burr (23),
**characterised in that**
e) the mould parting burr (23) is arranged outside the wrap-around disc holder (2) on a free end of the carrier horns (6a, 6b, 7a, 7b).

2. A brake carrier according to claim 1, **characterised in that** the brake carrier (1) has a fastening flange (5).

3. A brake carrier (1) according to any one of the preceding claims, **characterised in that** the brake carrier (1) has a reinforcing rib (11) that is arranged on the outside of the brake carrier (1) facing away from the fastening flange.

4. A brake carrier (1) according to claim 3, **characterised in that** the reinforcing rib (11) has a continuous contour geometry.

5. A brake carrier (1) according to any one of the preceding claims, **characterised in that** the wrap-around holder (2) has frame portions (4a, 4b).

6. A brake carrier (1) according to claim 5, **characterised in that** one or both of the frame portions (4a, 4b) broaden out from one end of the reinforcing rib (11) to an outer edge (12) of the side of brake carrier (1) facing the fastening flange.

7. A brake carrier (1) according to any one of the preceding claims, **characterised in that** the height of one set of carrier horns (6a, 6b) is different to the height of the other set of carrier horns (7a, 7b).

8. A brake carrier (1) according to any one of the preceding claims, **characterised in that** the height of the two carrier horns (6a, 6b) on the side of the brake carrier (1) facing the fastening flange is greater than the height of the two carrier horns (7a, 7b) on the side of the brake carrier (1) facing away from the fastening flange.

9. A brake carrier (1) according to any one of the preceding claims, **characterised in that** the brake carrier (1) is produced by a casting process.

10. A brake carrier (1) according to claim 9, **characterised in that** the brake carrier (1) is produced in a casting process using a permanent casting pattern (1') and a lost casting mould (17)..

11. A disc brake (100) having a brake carrier (1) according to any one of claims 1 to 10.

12. A casting mould (17) having two mould halves (18, 19) for producing a brake carrier (1) according to any one of claims 1 to 10, one mould half (19) having a standing core plate (20) and the other mould half (18) having a suspended core plate (21), these two core plates (19, 21) forming a brake disc slot (24) of the brake carrier (1) and the standing core plate (20) and the suspended core plate (21) meeting at a mould parting surface, **characterised in that the** mould parting surface (22) is arranged above the carrier horns (6a, 6b, 7a, 7b) of a casting pattern (1') of the brake carrier (1) incorporated in the mould.

13. A method for producing a brake carrier (1) with a casting mould (17) according to claim 12, **characterised by** the following steps:
a) the provision of a casting pattern (1') of the brake carrier (1);
b) the casting of an upper mould half (18) in a moulding material using the casting pattern (1'),the upper mould half (18) having a suspended core plate (21) for shaping a brake disc slot (24) of the brake carrier (1);
c) the removal of the moulded casting pattern (1') from the upper mould half (18);
d) the casting of a lower mould half (19) in a moulding material using the casting pattern (1'),the lower mould half (19) having a standing core plate (20) for shaping the brake disc slot (24) of the brake carrier (1);
e) the removal of the moulded casting pattern (1') from the lower mould half (18);
f) the assembly of the lower mould half (19) and the upper mould half (18) to form the casting mould (17), the standing core plate (20) and the suspended core plate (21) meeting at a mould parting surface (22) that is arranged above the carrier horns (6a, 6b, 7a, 7b) of the casting model (1') incorporated in the mould;
g) the pouring of liquid material into the casting mould (17);
h) the removal of the cooled brake carrier (1) from the casting mould (17) by destroying the casting mould;
j) the cleaning of the brake carrier (1);
k) the machining of the brake carrier (1).

14. A method according to claim 13, **characterised in that** method step j) optionally includes the removal of a mould parting burr (23).

## Revendications

1. Flasque (1) de frein d'un frein (100) à disque, ayant au moins une garniture (105, 106) de frein, le flasque (1) de frein ayant ce qui suit :
a) un serrage (2) de disque, qui serre, à la manière d'un cadre, une partie d'un disque (101) du frein (101) à disque associé ;
b) au moins un puits (6, 7) de garniture de frein, dans lequel le flasque (1) de frein guide la au moins une garniture (105, 106) de frein,
c) dans lequel le au moins un puits (6, 7) de garniture de frein est formé, sur le serrage (2) de disque, de cornes (6a, 6b, 7a, 7b) de support, de surfaces (9a, 9b, 10a, 10b) d'appui et de pontets (3a, 3b) et
d) le flasque (1) de frein est fabriqué en une seule pièce par un procédé de formage et a une bavure (23) de joint,
**caractérisé en ce que**
e) la bavure (23) de joint est disposée à l'extérieur du serrage (2) de disque, respectivement, à une extrémité libre des cornes (6a, 6b, 7a, 7b) de support.

2. Flasque (1) de frein suivant la revendication 1, **caractérisé en ce que** le flasque (1) de frein a une bride (5) de fixation.

3. Flasque (1) de frein suivant l'une des revendications précédentes, **caractérisé en ce que** le flasque (1) de frein a une nervure (11) de renfort, qui est disposée du côté extérieur, loin de la bride de fixation, du flasque (1) de frein.

4. Flasque (1) de frein suivant la revendication 3, **caractérisé en ce que** la nervure (11) de renfort a un tracé de contour continu.

5. Flasque (1) de frein suivant l'une des revendications précédentes, **caractérisé en ce que** le serrage (2) de disque a des parties (4a, 4b) de cadre.

6. Flasque (1) de frein suivant la revendication 5, **caractérisé en ce qu'**une ou deux des parties (4a, 4b) de cadre s'élargit, respectivement, à partir d'une extrémité respective de la nervure (11) de renfort, respectivement, jusqu'à un bord (12) extérieur du côté, tourné vers la bride de fixation, du flasque (1) de frein.

7. Flasque (1) de frein suivant l'une des revendications précédentes, **caractérisé en ce que** les unes cornes (6a, 6b) de support ont une hauteur différence des autres cornes (7a, 7b) de support.

8. Flasque (1) de frein suivant l'une des revendications précédentes, **caractérisé en ce que** les deux cornes (6a, 6b) de support, du côté tourné vers la bride de fixation du flasque (1) de frein, ont chacune une hauteur plus grande que les deux cornes (7a, 7b) de support, du côté loin de la bride de fixation du flasque (1) de frein.

9. Flasque (1) de frein suivant l'une des revendications précédentes, **caractérisé en ce que** le flasque (1) de frein est fabriqué par un procédé de coulée.

10. Flasque (1) de frein suivant la revendication 9, **caractérisé en ce que** le flasque (1) de frein est fabriqué dans un procédé de coulée ayant un modèle (1') de coulée permanent et un moule (17) de coulée perdu.

11. Frein (100) à disque ayant un flasque (1) de frein suivant l'une des revendications 1 à 10.

12. Moule (17) de coulée ayant deux moitiés (18, 19) de moule pour la fabrication d'un flasque (1) de frein suivant l'une des revendications 1 à 10, l'une des moitiés (19) du moule ayant une paraison (20) de moule fixe et l'autre moitié (18) de moule une paraison (21) de moule suspendu, qui forment un puits (24) de disque de frein du flasque (1) de frein et la paraison (20) de moule fixe et la paraison (21) de moule suspendu sont aboutées à une surface (22) de joint, **caractérisé en ce que** la surface (22) de joint est disposée, respectivement, au-dessus des cornes (6a, 6b, 7a, 7b) de support d'un modèle (1') de coulée moulé du flasque (1) de frein.

13. Procédé de fabrication d'un flasque (1) de frein par un moule (17) de coulée suivant la revendication 12, **caractérisé par** les stades de procédé suivants :
a) on se procure un modèle (1') de coulée du flasque (1) de frein ;
b) on moule une moitié (18) supérieure de moule en une matière moulée, en utilisant le modèle (1') de coulée, la moitié (18) supérieure de moule ayant une paraison (21) de moule suspendu pour former un puits (24) de disque de frein du flasque (1) de frein ;
c) on retire le modèle (1') de coulée moulé de la moitié (18) supérieure de moule ;
d) on moule une moitié (19) inférieure de moule en une matière moulée, en utilisant le modèle (1') de coulée, la moitié (19) inférieure de moule ayant une paraison (20) fixe pour former le puits (24) de disque de frein du flasque (1) de frein ;
e) on retire le modèle (1') de coulée moulé de la moitié (18) inférieure de moule ;
f) on assemble la moitié (19) inférieure de moule et la moitié (18) supérieure de moule en le moule (17) de coulée, la paraison (20) de moule fixe et la paraison (21) de moule suspendu s'aboutant à une surface (22) de joint, qui est disposée au-dessus des cornes (6a, 6b, 7a, 7b) de support du modèle (1') de coulée moulé ;
g) on coule du matériau liquide dans le moule (17) de coulée ;
h) on démoule le flasque (1) de frein refroidi du moule (17) de coulée, en détruisant le moule de coulée ;
j) on nettoie le flasque (1) de frein ;
k) on usine mécaniquement le flasque (1) de frein.

14. Procédé suivant la revendication 13, **caractérisé en ce que** le stade j) du procédé comporte facultativement l'élimination d'une bavure (23) de joint.
